Europäisches Patentamt

**European Patent Office**

**Office européen des brevets**

(11) Publication number: **0 119 498**
A2

# (12) EUROPEAN PATENT APPLICATION

(21) Application number: **84101762.7**

(22) Date of filing: **20.02.84**

(51) Int. Cl.³: **C 09 K 3/14,** B 24 D 3/28

(30) Priority: **22.02.83 US 468429**

(43) Date of publication of application: **26.09.84**
**Bulletin 84/39**

(84) Designated Contracting States: **AT DE FR GB IT SE**

(71) Applicant: **NORTON COMPANY, 1 New Bond Street,**
**Worcester Massachusetts 01606 (US)**

(72) Inventor: **Narayanan, Kesh Sampath, 328 Bailey Road,**
**Holden Massachusetts (US)**
Inventor: **Rue, Charles Victor, P.O. Box 206, Petersham**
**Massachusetts (US)**

(74) Representative: **Baillie, Iain Cameron et al, c/o Ladas &**
**Parry Isartorplatz 5, D-8000 München 2 (DE)**

(54) **Grinding wheel.**

(57) Improved performance or low cost with equivalent performance can be achieved in heavy duty steel snagging wheels by substitution, for conventional grits, up to 75% by volume of spherical sintered aluminous grits.

EP 0 119 498 A2

This invention relates to heavy duty snagging wheels for the conditioning of steel billets and slabs, particularly stainless steel.

Heavy duty snagging wheels for stainless steel grinding were made more efficient by the introduction, in about 1960, of sintered bauxite abrasive grits as a substitute for fused alumina grits. Such abrasive grits are described in U.S. Patent 3,079,243.

One product described by said patent has a blocky equidimensional shape. U.S. Patent 3,387,957 describes cylindrical sintered bauxite abrasive grits, made by extrusion of the raw material before firing, having a preferred length to diameter ratio of 1.5 to 1 and greater. U.S. Patent 3,183,071 discloses the use of high alumina mixes, other than bauxite, to produce similar rod shaped high alumina sintered abrasive products.

Patent 1,592,088 of the Federal Republic of Germany discloses the production of spherical sintered bauxite (or other high alumina material) abrasive grits for use in snagging wheels. That patent also states that sintered abrasive grits which are "crushed and sieved" can be mixed with fused alumina in making resin bonded snagging wheels. The patent further teaches that the extruded or "spagetti" or "rod" grits are superior to the crushed (equidimensional) grits. Because the "rod" grains are asserted to produce a rough finish, the patent suggests that the problem can be solved by the use of spherical sintered grains made from bauxite or other alumina mix as an improvement over the rod type grains.

0119498

U.S. Patent 3,890,072 teaches a method for forming sintered alumous spheres (e.g. sintered bauxite) of high sphericity and strength for use as a snagging abrasive or as a well proppant.

The present invention resides in the discovery that certain advantages in cost or performance can be achieved in grinding wheels for steel snagging by incorporating a blend of abrasive grits or two specifically different shapes, one of which is spherical. The spherical grits are formed of sintered alumous material. Such materials have recently been produced in large volumes for use in well propping.

The non-spherical grits may be extruded sintered rod-type aluminous abrasive such as described in U.S. Patent 3,387,957 mentioned above, or in U.S. Patents 3,183,071 or 3,481,723. The length to diameter ratios of such grits may vary from 1.4 to 1 to as high as 3 to 1.

Depending upon the quality and cost of the abrasives employed and the particular snagging application, the ratio of the spherical to the non-shperical grit may range from 3:1 to 1:3.

It is Applicant's theory that, in the case of spherical grits of a composition which otherwise would provide inferior grinding quality, that the interlocking of the abrasive particles of differing shape can permit substitution of up to 75% of the lower quality abrasive for the higher quality, more expensive abrasive, without significantly affecting grinding performance. Where the abrasives are of substantially equal inherent quality, the mixed shapes are believed to enhance grinding performance in at least some snagging applications.

The spherical abrasives useful in the present invention have a Krumbein roundness of 0.8 or higher. The rod shaped grits as noted above, have an average length to diameter ratio of 1.4 to 1, and higher.

Instead of the sintered rod shaped abrasive grits in admixture with the sintered aluminous grits, we may employ co-fused alumina zirconia grits having 10 to 60% zirconia, preferably 20 to 30% zirconia (such as described in U.S. Patent 3,181,939) and having a blocky shape such that the Krumbein number is 0.4 or less.

The Krumbein number, as a designation for sphericity, is commonly used to describe the shape of proppant media used in the oil and gas well drilling industry and is described in Measurement and Geological Significance of Shape and Roundness of Sedimentary Particles by W. C. Krumbein in the Journal of Sedimentry Petrology, Volume 11, pages 64 to 72, of 1941.

Wheels containing 50-50 by volume blends of rod-type abrasive and sintered bauxite spheres, in field tests in actual snagging of stainless steel in production mills, performed at least substantially equivalently in material removal rate and metal removal per wheel as abrasive wheels containing the more expensive standard rod type sintered abrasive, although in-house laboratory tests showed poorer results in some cases.

Similar results were obtained with a blend of 50% of blocky fused alumina-zirconia (75% zirconia), with 25% spherical, and 25% rod type.

Any of the known and conventional thermosetting resin bond systems can be employed to produce the wheels employing the mixed abrasive-grains combination of the invention.

0119498

A suitable mix is as follows:

| Ingredients-Bond | Weight % |
|---|---|
| Phenol-formaldehyde novolak resin (including 9 to 10% hexamethylenetetramine) | 26.9% |
| $FeS_2$ powder | 46.1 |
| $Na_3AlF_6$ powder | 12.0 |
| polyvinylidene chloride powder | 4.5 |
| lime | 10.5 |

| Wheel | Weight % |
|---|---|
| 50 volume % spherical sintered bauxite grits, Krumbein 0.9 | 67.0 |
| 50 volume % rod type sintered abrasive | |
| Bond | 29.8 |
| Chopped fiberglass | 3.2 |

The abrasive is wet with 1.2cc (per pound of mix) of furfurol and 1.6cc (per pound of mix) of carbarota (neutral anthracene oil), mixed with the powdered bond, and hot-pressed in a suitable mold and then baked to form heavy duty grinding wheels. Suitable conditions of hot pressing are 1 hour at 160°C. and 4500 psi, followed by an oven bake at atmospheric pressure for 24 hours at 200°C.

0119498

C L A I M S

1.      A heavy duty grinding wheel in which abrasive grits are bonded in a resin matrix, characterized in that the abrasive grits are a 3:1 to 1:3 by volume mix of spherical sintered bauxite abrasive particles having a Krumbein No. of at least 0.8 and non-spherical abrasive particles having a Krumbein No. of 0.4 or less.

2.      A grinding wheel according to claim 1, in which the non-spherical particles are fused alumina-zirconia.

3.      A grinding wheel according to claim 1, in which the non-spherical particles are rod-shaped sintered bauxite particles having a length to diameter ratio average greater than 1.4 to 1.

CASE BO-1633